Europäisches Patentamt

European Patent Office

Office européen des brevets

(19)

(11) Veröffentlichungsnummer: **0 282 010 B1**

(12) # EUROPÄISCHE PATENTSCHRIFT

(45) Veröffentlichungstag der Patentschrift: **03.06.92**

(51) Int. Cl.⁵: **F16H  47/02**

(21) Anmeldenummer: **88103639.6**

(22) Anmeldetag: **08.03.88**

(54) **Antriebseinrichtung, bestehend aus einem Antriebsmotor wechselnder Drehzahl, einem verstellbaren hydrostatischen Getriebe und einer schaltbaren Einrichtung.**

(30) Priorität: **09.03.87 DE 3707495**

(43) Veröffentlichungstag der Anmeldung:
**14.09.88 Patentblatt  88/37**

(45) Bekanntmachung des Hinweises auf die
Patenterteilung:
**03.06.92 Patentblatt  92/23**

(84) Benannte Vertragsstaaten:
**DE FR GB IT SE**

(56) Entgegenhaltungen:
**EP-A- 0 174 560      EP-A- 0 175 192**
**DE-A- 2 652 976      FR-A- 2 559 106**
**GB-A- 2 161 553      US-A- 3 903 756**

(73) Patentinhaber: **Hydromatik GmbH**
**Glockeraustrasse 2**
**W-7915 Elchingen 2(DE)**

(72) Erfinder: **Martini, Stefan**
**Auf dem Kreuz 41**
**W-7900 Ulm(DE)**
Erfinder: **Reistle, Wolfgang**
**Gartenstrasse 20**
**W-7907 Langenau(DE)**
Erfinder: **Sommer, Thomas**
**Robert-Koch-Strasse 8**
**W-7906 Blaustein(DE)**

(74) Vertreter: **Körber, Wolfhart, Dr.rer.nat. et al**
**Patentanwälte Dipl.-Ing. H. Mitscherlich**
**Dipl.-Ing. K. Gunschmann Dr.rer.nat. W. Körber Dipl.Ing. J. Schmidt-Evers Dipl.-Ing. W. Melzer Steinsdorfstrasse 10**
**W-8000 München 22(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Antriebseinrichtung nach dem Oberbegriff des Anspruchs 1.

In Antrieben von Arbeitsmaschinen oder Fahrzeugen werden Wandler wie stufenlos verstellbare hydrostatische Getriebe verwendet, bestehend aus wenigstens einer Pumpe und wenigstens einem Hydromotor, von denen wenigstens eines im Durchsatzvolumen verstellbar ist. Bei einem solchen Getriebe ist der maximale Wandlungsbereich durch das Verhältnis der Pumpen- und Hydromotorgröße sowie deren Drehzahl gegeben. Um den Wandlungsbereich der Antriebseinrichtung darüber hinaus zu erweitern, verwendet man u.a. Stufengetriebe, die vorzugsweise im Lastzustand des Antriebs geschaltet werden können.

Komplexe Steuereinrichtungen sorgen dafür, daß die unstetige Veränderung der Drehzahlverhältnisse im Antrieb, die durch ein Schalten des Stufengetriebes bewirkt werden, durch eine umgekehrt proportionale Verstellung des stufenlos verstellbaren hydrostatischen Getriebes wenigstens teilweise kompensiert werden, um Sicherheit und Fahrkomfort zu erhöhen oder Bauteile von schlagartigen Laständerungen zu schützen (vgl. DE-A-23 7 550, 26 52 976, 34 33 494).

Beim Einsatz eingangs angegebener Arbeitsmaschinen oder Fahrzeugen, wie insbesondere Baufahrzeugen, ergibt sich nicht nur ein normaler Lastbetrieb, bei dem eine positive Leistungsübertragung vom Antriebsmotor zum Schaltgetriebe gegeben ist, sondern auch ein sogenannter Schiebebetrieb, bei dem nach Übertragungsumkehr eine negative Leistungsübertragung gegeben ist, d.h., bei dem die Leistung vom Schaltgetriebe auf den Antriebsmotor übertragen wird.

Bei den bekannten Ausgestaltungen wird beim Herunterschalten in eine niedrige Gangstufe die Ausgangsdrehzahl des hydrostatischen Getriebes aus der jeweils vorhandenen Drehzahlsituation heraus erhöht, um diese Ausgangsdrehzahl des hydrostatischen Getriebes an den durch die Schaltstufe vorgegebenen Synchronisationspunkt anzupassen und somit ein ruckfreies bzw. ruckarmes Schalten zu erreichen. Dies gilt insbesondere bei negativer Leistungsübertragung, da die Antriebsmotordrehzahl aufgrund des kurzzeitigen Fortfalls bzw. der Verringerung der Leistungsübertragung beim Schalten (Motordrückung) um einen gewissen Betrag abfällt. Diese Maßnahme entspricht nicht der dem Gangstufenwechsel zugrundeliegenden Absicht, nämlich die, die Antriebsmaschine bzw. das Fahrzeug zu verlangsamen.

Der Erfindung liegt die Aufgabe zugrunde, ein möglichst einfaches Steuerungskonzept zu entwickeln, das ein subjektiv gutes Schaltverhalten zeigt, auch ohne daß durch aufwendige Zusatzeinrichtungen in das Regelverhalten des stufenlos verstellbaren hydrostatischen Getriebes eingegriffen werden muß.

Diese Aufgabe wird durch die kennzeichnenden Merkmale des Anspruchs 1 gelöst.

Bei der erfindungsgemäßen Ausgestaltung wird beim Herunterschalten im Schiebebetrieb die Ausgangsdrehzahl des hydrostatischen Getriebes nicht wie üblich vergrößert sondern verringert durch eine Verringerung der Durchsatzmenge der bei negativer Leistungsübertragung als Motor funktionierenden Pumpe und/oder durch eine Verringerung der Durchsatzmenge des als Pumpe funktionierenden Motors, und somit das Übersetzungsverhältnis

$$i = \frac{n_{Eingangsdrehzahl}}{n_{Ausgangsdrehzahl}}$$

vergrößert. Hierdurch wird ein Bremsvorgang eingeleitet, durch den die Abtriebsdrehzahl der Antriebseinrichtung bzw. die Geschwindigkeit der angetriebenen Arbeitsmaschine verringert wird, bis die der jeweiligen Stellung des Betätigungsgliedes (Gaspedal) entsprechende Drehzahl bzw. Geschwindigkeit im nächst niedrigeren Gang erreicht ist. Je nach Stellung des Betätigungsgliedes kann dabei auch Stillstand erreicht werden. Dies kann durch die automatische Wirkung von an der Verstelleinrichtung für die Pumpe bzw. den Hydromotor vorhandenen Rückstellgliedern, wie eine Feder, erfolgen. Andererseits ist es im Rahmen der Erfindung möglich, die erfindungsgemäße Verringerung der Abtriebsdrehzahl durch einen Regelungsvorgang zu bewirken.

Erfindungsgemäß wird der Schubbetrieb in eine geringere Geschwindigkeit überführt. Durch diese Vergrößerung des Übersetzungsverhältnisses (hydrostatisches Getriebe anstelle des mechanischen Getriebes) wird dem Schubbetrieb und auch der Erwartungshaltung der Bedienungsperson entsprochen.

Das Schalten erfolgt erst dann, wenn eine genügend große Leistung, insbesondere eine positive Leistungsübertragung vom Dieselmotor zur Antriebsachse erreicht ist.

Im Rahmen der Erfindung kann der Fahrer auch durch Betätigung des Betätigungsgliedes die positive Leistungsübertragung bzw. die Leistung (Anspruch 2) vorgeben und somit den ruckarmen bzw. -freien Schaltvorgang herleiten.

Erfindungsgemäß erfolgt somit das Herunterschalten nur bei positiver Leistungübertragung. Dabei macht sich die Erfindung die Erkenntnis zugute, daß beim Herunterschalten bei positiver Leistungsübertragung sich die Drehzahl des Antriebsmotors bzw. die Ausgangsdrehzahl des hydrostatischen Getriebes aufgrund des kurzzeitigen Fortfalls des wirksamen Momentes während des Umschaltens erhöht und somit automatisch der nach der Umschaltung vorliegenden Drehzahl nähert, wodurch ggf. ohne einen besonderen bzw. geregelten Synchronisationsvorgang das Schalten ruckfrei oder -arm durch einen einfachen selbständig ablaufenden Vorgang erfolgen kann.

Die erfindungsgemäße Ausgestaltung eignet sich insbesondere für in Abhängigkeit von der Drehzahl des Antriebsmotors geregelte (Drehzahlregler) Wandler.

Um eine gewisse Funktionssicherheit zu erreichen, ist es vorteilhaft, den Schaltvorgang bei genügend großer positiver Leistungsübertragung durchzuführen.

Die Ausgestaltung nach Anspruch 2 ermöglicht nicht nur eine einfache Bestimmung der Übertragungsrichtung sondern auch deren einfache Ermittlung insbesondere bei negativer Leistungsübertragung. Weitere Möglichkeiten hierzu sind in den Ansprüchen 4 bis 6 enthalten. Eine vorteilhafte Möglichkeit besteht darin, die Eingangs-und Ausgangsdrehzahl des hydrostatischen Getriebes oder hierzu synchrone Signale mit einer besonderen Kennlinie zu vergleichen (Anspruch 15).

Im Fall der Leistungsübertragung von Arbeitsmaschine zu Antriebsmotor, z.B. im Schiebebetrieb des Fahrzeugs oder bei Konstantantrieb, wird durch eine Betätigung des Vorwahlschalters in den nächstniedrigeren Gang das Pumpenfördervolumen verringert und so lange die Geschwindigkeit oder Drehzahl der Antriebseinrichtung bzw. der von dieser angetriebenen Arbeitsmaschine reduziert, bis entweder im wesentlichen Stillstand erreicht wird oder der Fahrer durch Betätigung des Fahrhebels eine genügend große positive Leistung vorgibt, so daß ein ruckarmer Umschaltvorgang eingeleitet werden kann. Diese Antriebssituation (Beschleunigung) vermag die Regeleinrichtung durch den oder entsprechende Signalgeber zu erkennen und die Antriebseinrichtung entsprechend zu regeln.

Es ist im Rahmen der Erfindung auch möglich, eine positive und/oder negative Kraft- bzw. Leistungsübertragung durch Überwachung des Hochdrucks und/oder Niederdrucks im hydrostatischen Getriebe (Hauptleitungsabschnitte) mittels Druckmesser zu ermitteln.

Bei der erfindungsgemäßen Ausgestaltung kann durch die Regeleinrichtung die Fördervolumina der Pumpe und/oder des Hydromotors in Abhängigkeit von der Eingangsdrehzahl des hydrostatischen Getriebes und einem Wählschalter für Vorwärts- oder Rückwärtsfahrt eingestellt werden, und es kann auch eine zweite Regeleinrichtung vorgesehen sein, die in Abhängigkeit eines Gangstufenvorwahlschalters und der Drehzahl-Signale der Eingangswelle und der Ausgangswelle des hydrostatischen Getriebes die Umschaltung des Wandlungsbereiches durch entsprechende Beschaltung von Umschaltelementen des Stufengetriebes durchführt und das Verstellsignal des Förder-/Schluckvolumens bzw. der Verstellvorrichtung beeinflussen kann.

Wenn zwei Pumpen oder Hydromotoren parallel angeordnet sind, die einzeln oder gemeinsam einschaltbar sind, ist es vorteilhaft, deren Volumeneinstellungen vorzugsweise durch die erste Regeleinrichtung zu bewirken.

Es ist auch möglich, daß die zweite Regeleinrichtung während des Umschaltvorgangs des Wandlungsbereiches zur Verringerung des Übersetzungsverhältnisses zwischen den Drehzahlen der Eingangswelle und der Abtriebswelle bzw. Ausgangswelle des hydrostatischen Getriebeteils (durch Schalten der nächsthöheren Gangstufe bei der schaltbaren Einrichtung oder Reduktion des Schluckvolumens des Hydromotors durch hydraulisches und/oder mechanisches Abschalten bzw. Umschalten von vorhandenen Hydromotoren im Leistungszweig des hydrostatischen Getriebeteils) in das Verstellsignal der Pumpe und/oder des Hydromotors derart eingreift, daß das Fördervolumen der Pumpe reduziert und/oder das Schluckvolumen des Hydromotors vergrößert und dadurch der Volumenstrom von Pumpe zu Hydromotor an den nach Umschaltung zu erwartenden Volumenstrom angenähert wird (Vorsynchronisierung).

Es kann auch vorgesehen sein, daß ein Umschalten des Gangstufenvorwahlschalters zu größerem Übersetzungsverhältnis zwischen den Drehzahlen der Eingangswelle und der Abtriebswelle des hydrostatischen Getriebes von der Regeleinrichtung nur dann in ein Umschalten der Schaltelemente umgewandelt wird, wenn die derzeitige Drehzahl der Ausgangswelle des hydrostatischen Getriebes rechnerisch erhöht um die von der Umschalteinrichtung zu erwartenden Übersetzungsänderung nicht über der maximal zulässigen Drehzahl des Hydromotors liegt (Sicherheitsschaltung) und das Drehzahlverhältnis zwischen der Eingangswelle und der Ausgangswelle einen bestimmten Wert überschreitet und in allen anderen Antriebszuständen durch Übersteuerung des Verstellsignals von der Regeleinrichtung das Förder- bzw. Schluckvolumen der Pumpe bzw. des Hydromotors derart verstellt wird, daß sich zwangsweise der vorbeschriebene Antriebszustand einstellt und daß dieser zur Umschaltung der Schaltelemente günstige Antriebszustand durch Erhöhung des Lastzustandes des Antriebsmotors (Gasgeben) zeitlich verkürzt erreicht werden kann.

Es ist im Rahmen der Erfindung auch möglich, durch eine externe Optionsschaltung das Umschalten der Schaltelemente zu verhindern.

Die Ausgestaltungen nach den Ansprüchen 7 bis 13 vereinfachen die Regelung zum einen durch Unterteilung der Regelungsbereiche und zum anderen durch Ausnutzung bewährter Regelungsmittel, wobei bei der Ausgestaltung gemäß Anspruch 7 eine besondere Regelvorrichtung gleichzeitig Einfluß auf den Hydromotor nimmt, wodurch der Wandlungsbereich in einfacher Weise wesentlich vergrößert werden kann.

In den Ansprüchen 14 und 15 sind weitere einfache und funktionssichere Maßnahmen enthalten, die die Feststellung der Leistung ermöglichen, bzw. ermöglichen, ob die Antriebseinrichtung sich im normalen Lastbetrieb oder im Schiebebetrieb befindet. Die Ergebnisse der Drehzahlmesser können auch dazu ausgenutzt werden, eine exakte bzw. gezielte Regelung herbeizuführen.

In den Ansprüchen 16 und 17 sind weitere Ausgestaltungen enthalten, um den Wandlungsbereich des hydrostatischen Getriebes zu variieren.

Nachfolgend wird die Erfindung anhand von in vereinfachten Zeichnungen dargestellten bevorzugten Ausführungsbeispielen näher erläutert. Es zeigt:

Fig. 1 eine erfindungsgemäß ausgestaltete Antriebseinrichtung in schematischer Darstellung;

Fig. 2 ein Funktionsdiagramm für die Antriebseinrichtung;

Fig. 3 eine Abwandlung der Antriebseinrichtung;

Fig. 4 eine erfindungsgemäß ausgestaltete Antriebseinrichtung in schematischer Darstellung als weiteres Ausführungsbeispiel.

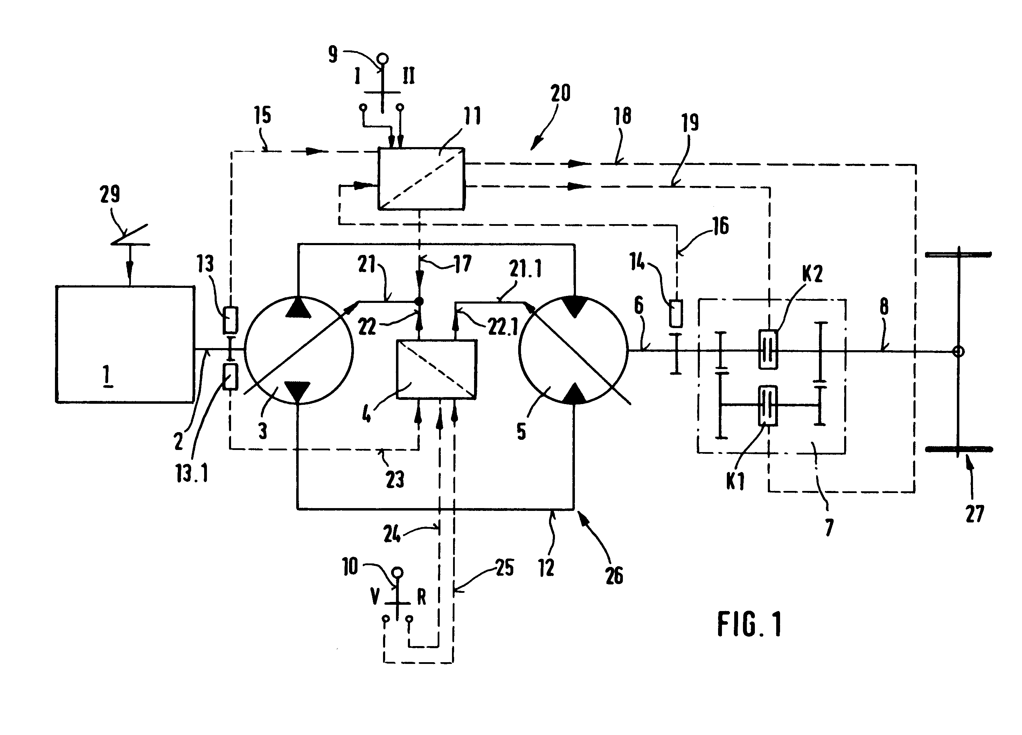

Die wesentlichen Teile der in Fig. 1 dargestellten Antriebseinrichtung sind ein Antriebsmotor 1 wechselnder Drehzahl, z.B. ein Verbrennungsmotor wie ein Dieselmotor, mit einer Antriebswelle 2, eine von letzterer angetriebene Pumpe 3 verstellbaren Fördervolumens, die für den Betrieb in beide Richtungen eingerichtet ist, ein Regelgerät 4, ein Hydromotor 5, der ebenfalls für beide Drehrichtungen eingerichtet und dessen Ausgangswelle 6 mit einem Lastschaltgetriebe 7 antriebsmäßig verbunden ist, dessen Ausgangswelle mit 8 bezeichnet ist, ein Vorwahlelement 9 mit zwei Funktionsstellungen I und II für die Vorwahl einer ersten und einer zweiten Gangstufe, nämlich einem ersten und einem zweiten Gang, ein weiteres Vorwahlelement 10 für Vorwärts- und Rückwärtsfahrt V bzw. R, ein weiteres Regelgerät 11, ein bzw. zwei der Antriebswelle 2 bzw. der Welle der Pumpe zugeordnete Drehzahlmesser 13,13.1, zweckmäßiger Weise Klemme oder Lichtmaschine bei einem Dieselmotor, und ein der Ausgangswelle 6 des Hydromotors 5 zugeordneter Drehzahlmesser 14.

Die beiden Regelgeräte 4,11 sind vereinfacht dargestellt. Das mit 11 bezeichnete elektronische Regelgerät ist durch Signalleitungen 15 bis 19 mit den Drehzahlmessern 13 und 14, mit einer Verstelleinrichtung 21 für die Pumpe 3 und mit den dem Lastschaltgetriebe 7 zugeordneten ggf. kupplungsähnlichen Schaltelementen K1 und K2 verbunden. Das Regelgerät 11 stellt fest, ob ein positiver oder negativer Leistungsfluß zwischen dem Antriebsmotor 1 und dem Lastschaltgetriebe 7 vorliegt, es greift in die Regelung der Verstelleinrichtung 21 ein, und es bewirkt die Schaltung des Lastschaltgetriebes. Die Regeleinrichtung ist insgesamt mit 20 bezeichnet.

Das Regelgerät 4 ist durch Signalleitungen 22 bis 25 mit nur andeutungsweise dargestellten Verstelleinrichtungen 21,21.1, mit dem Drehzahlmesser 13.1 und dem Vorwahlelement 10 verbunden. Beim Regelgerät 4 handelt es sich um einen Drehzahlregler, dessen Drehzahlabhängigkeit durch die Signalleitung 22 und den Drehzahlmesser 13.1 zum Ausdruck kommt. Vorzugsweise ist die Anordnung so getroffen, daß das Regelgerät 11 das Regelgerät 4 nach Vorwahl des niedrigeren Ganges I und beim Vorhandensein eines negativen Leistungsflusses übersteuert, d.h., in den Regelungsvorgang des Regelgeräts 4 eingreift.

Im folgenden wird die Funktion der Antriebseinrichtung gemäß Fig. 1 beschrieben.

Die vom Antriebsmotor 1 aufgebrachte Antriebskraft wird mittels des verstellbaren, durch die Pumpe 3, den Hydromotor 5 und eine Hauptleitung 12 gebildeten verstellbaren hydrostatischen Getriebes 26, dem Lastschaltgetriebe 7 übertragen, dessen Ausgangswelle 8 mit einer Arbeitsmaschine verbunden ist, insbesondere eine Baumaschine oder ein Baufahrzeug wie ein Radlader, dessen Fahrwerk mit 27 bezeichnet ist.

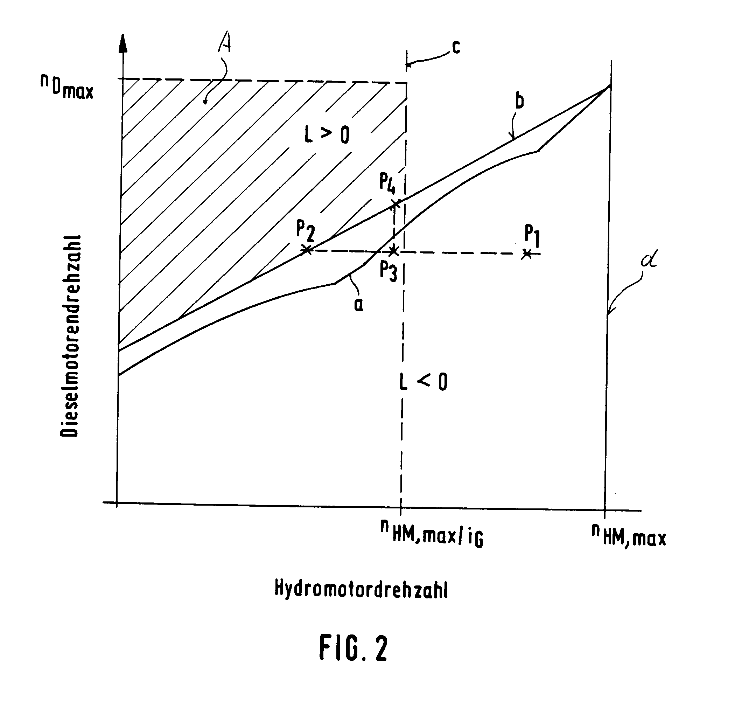

Im Funktionsdiagramm gemäß Fig. 2, in dem schaubildlich die Drehzahl $n_D$ des Antriebsmotors 1 über der Hydromotordrehzahl $n_{HM}$ dargestellt ist, stellt die Kurve a eine Reglerkennlinie des Regelgeräts 4, nämlich die Abhängigkeit der Hydromotordrehzahl $n_{HM}$ von der Antriebsmotordrehzahl $n_D$ im lastfreien Zustand dar, d.h. in einem Zustand, in dem die Räder bzw. das Fahrwerk 27 des Radladers unbelastet sind, wie es z.B. auf einem Prüfstand der Fall ist, auf dem die Räder bzw. das Fahrwerk frei drehen können. Aus der Kurve a ergeben sich somit die Drehzahlen $n_{HM}$ des Hydromotors 5 in Abhängigkeit von der Stellung eines den Antriebsmotor 1 steuernden Fahrpedals 29 in Abhängigkeit der Reglerkennlinie des Regelgeräts 4 im quasi unbelasteten Zustand der Antriebseinrichtung. Das Regelgerät 11 der allgemein mit 20 bezeichneten Regeleinrichtung vermag anhand eines Vergleichs der von den Drehzahlmessern 13 und 14 ermittelten Drehzahlen, die den sich im Betrieb, d.h. unter Einwirkung von Last am Fahrwerk 27, einstellenden Drehzahlverlauf darstellen, mit einer im Regelgerät 11 gespeicherten Kennlinie b, zu ermitteln, ob eine positive oder eine negative Leistung vorliegt, d.h., ob die Antriebskraft vom Antriebsmotor 1 auf das Lastschaltgetriebe 7 (normaler Lastbetrieb) oder von letzterem bzw. vom Fahrwerk 27 auf den Antriebsmotor 1 (Schiebebetrieb) übertragen wird.

Mit der senkrechten Linie c ist der Grenzbereich der Gangstufe I, nämlich eine bestimmte Maximaldrehzahl $n_{HMmax}$ in der Gangstufe I, und mit der senkrechten Linie d ist die obere Grenze der Gangstufe 11, nämlich die Maximaldrehzahl $n_{HMmax}$ in der Gangstufe II bezeichnet. Unterhalb der Kennlinie b ergibt sich der Schiebebetrieb, der durch die Bezugszeichen L < 0 (Leistung kleiner Null) bezeichnet ist, und oberhalb der Linie b ergibt sich der normale Lastbetrieb, der durch die Bezugszeichen L > 0 (Leistung größer Null) bezeichnet ist. Der mit A bezeichnete und schraffierte Bereich im Funktionsdiagramm oberhalb der Linie b stellt somit den Bereich dar, in dem die Erfindung gemäß einem Hauptaspekt zur Wirkung kommt.

Die Fahrtrichtung vorwärts (V) oder rückwärts (R) und die Gangstufe I oder II werden an den Vorwahlelementen 9,10 vorgewählt. Das Übersetzungsverhältnis des hydrostatischen Getriebes 26 wird bei positiver Leistung in Abhängigkeit der im Regelgerät 4 vorgegebenen Reglerkennlinie eingestellt. Für die zu beschreibende Funktion sei angenommen, daß der Radlader oder auch ein Erdschieber bei Vorwärtsfahrt und in der Gangstufe II beladen zu einem Lastwagen fährt, um den Aushub aufzuladen.

Zum Einleiten einer Schaltung von der Gangstufe II in die Gangstufe I ist der Vorwahlhebel 9 entsprechend zu betätigen, d.h. zur Schaltstellung I hin. Wenn das Regelgerät 11 dabei den Schiebebetrieb ermittelt, hier bei der Geschwindigkeitsverringerung des Radladers vor einem Lastwagen, wird durch das Regelgerät 11 eine Verringerung des Durchsatzvolumens der nun als Motor wirksamen Pumpe 3 und/oder eine Vergrößerung des Durchsatzvolumens des nun als Pumpe wirksamen Hydromotors 5 und somit eine Bremsung eingeleitet, bis die der Fahrpedalstellung im ersten Gang entsprechende Fahrgeschwindigkeit erreicht wird. Bei diesem Vorgang wird das Regelgerät 4 übersteuert, wobei das Regelgerät 11 auf die andeutungsweise dargestellten Betätigungsmittel 21,21.1 wirkt. Dann erfolgt bei nunmehr positiver Leistung das Schalten in den ersten Gang durch Signalübermittlung vom Regelgerät 11 über die Signalleitung 18 oder 19 zur zugehörigen Kupplung K1 oder K2. Beim Herunterschalten von der Gangstufe II in die Gangstufe I bei genügend positiver Leistung bedarf es keiner besonderen Maßnahme bzw. kann auf eine durch den Stufensprung bedingte Drehzahlanpassung verzichtet werden, weil bei der kurzzeitigen Unterbrechung der Antriebsverbindung zwischen dem Fahrwerk 27 und dem Hydromotor 5 letzterer hochgedreht wird, wodurch eine Annäherung bzw. Anpassung der Ausgangsdrehzahl des hydrostatischen Getriebes 26 an den Stufensprung automatisch erreicht wird, so daß auch hier ein ruckarmes bzw. ruckfreies Schalten möglich ist.

Diese Schaltvorgänge können stattfinden, wie es in DE-A-34 33 494 und 34 33 495 beschrieben ist. Zwecks Vermeidung von Wiederholungen wird auf diese Druckschriften Bezug genommen.

Bei der vorliegenden Antriebseinrichtung ergeben sich auch zwei weitere Schaltzustände, nämlich das Heraufschalten und das Herunterschalten im normalen Lastbetrieb.

Beim Heraufschalten von der Gangstufe I in die Gangstufe II wird für eine kurze Zeit, die zum Schalten, d.h. zum Entleeren und Befüllen der Lamellenkupplungen K1 bzw. K2 benötigt bzw. bestimmt wird, das Fördervolumen der Pumpe 3 reduziert und/oder das Schluckvolumen des Hydromotors 5 und dadurch das Übersetzungsverhältnis des hydrostatischen Getriebes vergrößert. Hierdurch wird die Ausgangsdrehzahl des hydrostatischen Getriebes 26 verringert und somit der durch die Schaltung erforderliche Drehzahlsprung angepaßt bzw. angenähert, wodurch ebenfalls ein ruckarmes bzw. ruckfreies Schalten erreicht wird.

Das Regelgerät 11 ist so eingerichtet, daß jeweils der Schaltvorgang erst dann durchgeführt wird, wenn die nach dem Schaltvorgang zu erwartende Eingangsdrehzahl des Stufengetriebes 7 eine bestimmte Ausgangsdrehzahl des hydrostatischen Getriebes 26 nicht übersteigt. Beim vorliegenden Ausführungsbeispiel ist dies die konstruktiv vorgegebene Maximaldrehzahl des Hydromotors 5.

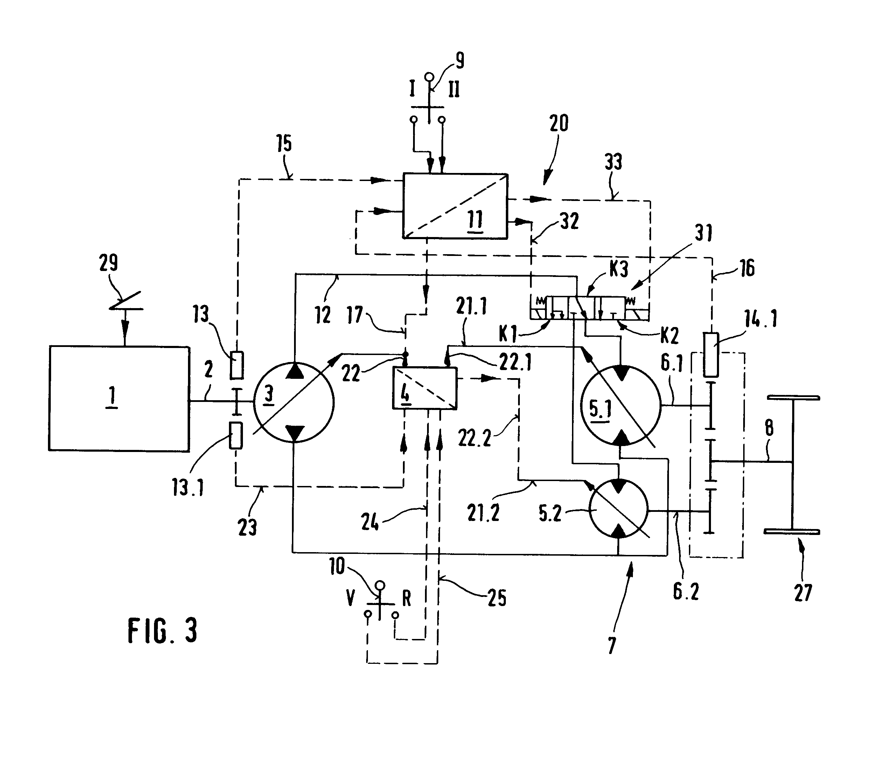

Beim Ausführungsbeispiel gemäß Fig. 3 ist das Lastschaltgetriebe 7 in das hydrostatische Getriebe 26 integriert. Es sind zwei Hydromotoren 5.1,5.2 mit verstellbarem Schluckvolumen vorhanden, die für den Betrieb in beide Drehrichtungen eingerichtet sind. Die Verstelleinrichtungen der Hydromotoren 5.1,5.2 sind mit 21.1 und 21.2 bezeichnet, und sie werden vom Regelgerät 4 beaufschlagt. Die Hydromotoren 5.1 und 5.2 können mittels eines in der Hauptleitung 12 angeordneten, durch das Regelgerät 11 gesteuerten Steuer- oder Regelventils 31 wahlweise einzeln oder gemeinsam eingeschaltet werden. Hierdurch sind drei Schaltstufen K1 bis K3 geschaffen, die durch drei Schaltstellungen des beim vorliegenden Ausführungsbeispiel durch ein elektrisch ansteuerbares 3/3-Wegeventil gebildeten Steuer- oder Regelventils 31 einstellbar sind. Die mit den Signalleitungen 18 und 19 des ersten Ausführungsbeispiels vergleichbaren Ansteuerleitungen sind mit 32 und 33 bezeichnet. Da die Hydromotoren 5.1,5.2 auch einzeln einschaltbar sind, ist jeder Ausgangswelle 6.1,6.2 ein Drehzahlmesser zugeordnet (nicht dargestellt), oder es kann je nach Getriebeausführung auch ein gemeinsamer Drehzahlmesser 14.1 dem Getriebe 7 zugeordnet sein.

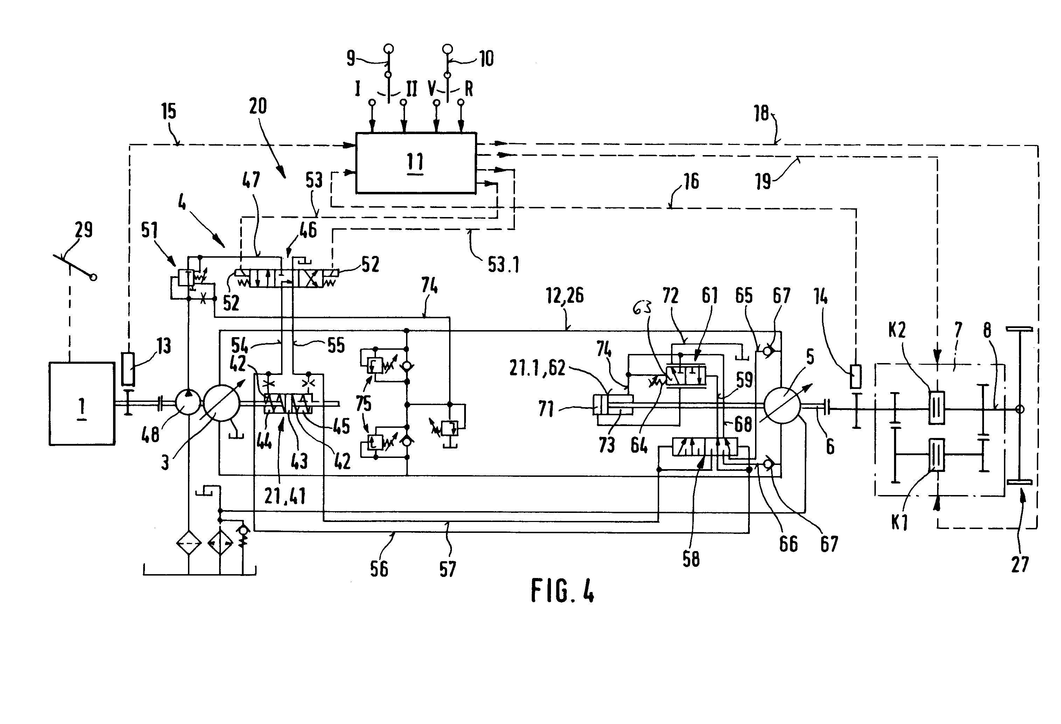

Das Ausführungsbeispiel gemäß Fig. 4, bei dem gleiche Teile mit gleichen Bezugszeichen bezeichnet sind, unterscheidet sich vom Ausführungsbeispiel gemäß Fig. 1 u.a. dadurch, daß das Regelgerät 4 durch ein hydraulisches Regelgerät, nämlich einem Drehzahl- bzw. Leistungsregler für das hydrostatische Getriebe 26 gebildet ist. Dieses Regelgerät 4 ist von der in der DE-C-22 47 437 beschriebenen Art, wobei auf das in jener Druckschrift mit dem Bezugszeichen 10 bezeichnete Ventil verwiesen wird. Das Vorwahlelement 10 entspricht dem in jener Druckschrift mit dem Bezugszeichen 23 bezeichneten Umschalt- bzw. Wegeventil. Es wird auf die in der DE-C-22 47 437 enthaltene Beschreibung in vollem Umfang Bezug genommen, um Wiederholungen zu vermeiden.

Die Pumpe 3, deren Fördermenge ebenfalls in beiden Drehrichtungen verstellbar ist, wird durch einen Hydraulikzylinder 41 verstellt, dessen durch Federn 42 mittenzentrierter Doppelkolben 43 durch wahlweise Beaufschlagung der Arbeitsräume 44,45 verstellbar ist. Hierzu dient ein Wegeventil 46, das jeweils durch Vorwahl der Forwärts-oder Rückwärtsfahrt (V,R) den einen oder anderen Arbeitsraum 44,45 mit einer Hydraulikleitung 47 verbindet, in die eine mit der Pumpe 3 synchron angetriebene Hilfspumpe 48 fördert. In der Hydraulikleitung 47 ist eine sogenannte Druckwaage angeordnet, bestehend aus einer nicht dargestellten Drossel und einem dieser in Strömungsrichtung nachgeordneten Druckregelventil 51, das durch den in der Hydraulikleitung 47 vor der Drossel anstehenden Hilfsdruck verstellbar ist. Dem Wegeventil 46 sind Schaltmagnete 52 zugeordnet, die auch durch Proportionalmagnete gebildet sein können, die gegen andeutungsweise dargestellte, vorzugsweise einstellbare Federn wirksam sind und die über elektrische Signalleitungen 53,53.1 vom Regelgerät 11 gesteuert sind.

Das hydraulische Regelgerät 4 ist auch dazu eingerichtet, die Verstelleinrichtung 21.1 des Hydromotors 5 zu beaufschlagen. Hierzu dienen von den sich zwischen dem Wegeventil 46 und dem Hydraulikzylinder 41 erstreckenden Leitungsabschnitten 54,55 weiterführende Leitungsabschnitte 56,57, die ein Schaltventil 58 beaufschlagen, das deren Durchgang zu einer gemeinsamen Steuerleitung 59 steuert, mittels der ein Druckregelventil 61 beaufschlagbar ist, das die ebenfalls durch einen Hydraulikzylinder 62 gebildete Verstelleinrichtung 21.1 einstellt. Der Ventilschieber 63 des Druckregelventils 61 wird auf einer Seite vom Hilfsdruck des hydraulischen Regelgeräts 4 und auf seiner anderen Seite vom ggf. reduzierten Arbeitsdruck des hydrostatischen Getriebes 26 und zugleich von einer vorzugsweise einstellbaren Feder 64 beaufschlagt. Der Arbeitsdruck wird durch von der Hauptleitung 12 vor und hinter dem Hydromotor 5 ausgehenden Leitungsabschnitten 65,66 zugeführt, in denen in Richtung auf das Schaltventil 58 öffnende Rückschlagventile 67 angeordnet sind, deren Durchgang zu einer gemeinsamen, den Steuerschieber 63 beaufschlagenden Steuerleitung 68 ebenfalls durch das Schaltventil 58 gesteuert wird. Das Druckregelventil 61 ist in einer vom Arbeitsraum 71 des Hydraulikzylinders 62 ausgehenden Rücklaufleitung 72 angeordnet. Der andere Arbeitsraum 73 des Hydraulikzylinders 62 ist durch einen Leitungsabschnitt 74 mit der Steuerleitung 68 verbunden und somit durch den Arbeitsdruck beaufschlagbar. Infolge dessen wirken sowohl der Arbeitsdruck als auch der Hilfsdruck als Steuerdruck auf das Druckregelventil 61 und als Verstelldruck auf den Kolben des Hydraulikzylinders 62.

Die Anordnung ist so getroffen, daß der Hydromotor 5 sich in maximaler Schluckvolumeneinstellung befindet, wenn die Fördermengeneinstellung der Pumpe 3 minimal eingestellt ist und umgekehrt. Dabei ist die Anordnung auch so getroffen, daß der Hydromotor 5 erst dann in Richtung auf minimales Schluckvolumen verstellt wird, wenn die Pumpe 3 ihre maximale Fördermengeneinstellung erreicht hat. Das Wegeventil 46 steuert dabei sowohl die Pumpe 3 als auch den Hydromotor 5 hinsichtlich der jeweiligen übereinstimmenden Drehrichtung.

Der Hilfskreis dient gleichzeitig auch zur Speisung der Hauptleitung 12 des hydrostatischen Getriebes 26, wozu eine vom Druckregelventil 51 ausgehende Leitung 74 dient. Mit 75 sind Druckbegrenzungsventile für den Arbeitsdruck der hydrostatischen Getriebe 26 bezeichnet.

Auch bei diesem Ausführungseispiel erfolgt im Schiebebetrieb ein Herunterschalten von der Gangstufe II in die Gangstufe I erst nach einer Verringerung des Fördervolumens der Pumpe 3 und/oder einer Vergrößerung des Schluckvolumens des Hydromotors 5 und der damit durchgeführten Bremsung.

Beim Heraufschalten von der Gangstufe I in die Gangstufe II erfolgt ebenfalls eine Verringerung des Fördervolumens der Pumpe 3 und/oder eine Vergrößerung des Schluckvolumens des Hydromotors 5 in der vorbeschriebenen Weise, und zwar während der Ansprechzeit der Kupplungen K1 und K2, hier jedoch zu dem Zweck, die Ausgangsdrehzahl des hydrostatischen Getriebes 26 zu verringern und an die durch den Stufensprung bestimmte Drehzahl anzupassen. Dies kann durch eine Steuerung - hier durch Beaufschlagung oder Abschaltung des Steuerventils 47 durch das Regelgerät 11 in die Mittelstellung - über eine bestimmte ggf. immer konstante oder vom Lastzustand abhängige Zeitspanne erfolgen, wodurch zumindest eine Annäherung der Drehzahlen erreicht wird.

Die Abschaltung kann in einfacher Weise durch Abschalten der elektrischen Beaufschlagung des Wegeventils 46 erfolgen, dessen Schieber dann seine Mittelstellung einnimmt, in der der Steuerstrom zum Verstellzylinder 41 unterbrochen ist. Die Folge ist eine automatische Rückstellung mittels vorhandener Federn 42 des Verstellzylinders 41 der Pumpe 3 in Richtung Förderung = 0 und des Verstellzylinders 62 des Hydromotors 5 in Richtung maximales Schluckvolumen.

Beim Ausführungsbeispiel gemäß Fig. 4 wird in verlgeichbarer Weise wie bei den vorbeschriebenen Ausführungsbeispielen in den Bereichen L < 0 oder $n_{HM} > n_{HMmax}$ die Ausgangsdrehzahl des hydrostatischen Getriebes 26 durch Vergrößerung seines Übersetzungsverhältnisses verringert (Bremsung), und zwar durch die vorbeschriebene Abschaltung des Steuerventils 47. Sobald der positive Leistungsfluß erreicht ist, wird unter Ausnutzung des eigendynamischen Verhaltens des Regelgerätes 4 heruntergeschaltet.

Es ist im Rahmen der Erfindung jedoch auch möglich, sowohl beim Herunterschalten im normalen Lastbetrieb als auch beim Heraufschalten durch das Regelventil 47 eine Synchronisation der Ausgangsdrehzahl des hydrostatischen Getriebes 26 an die durch die Schaltstufe bedingte Drehzahl, d.h. durch eine entsprechende Verringerung oder Vergrößerung des Übersetzungsverhältnisses des hydrostatischen Getriebes 26, durch Regelung und Vergleich der Ausgangsdrehzahl mit der Getriebedrehzahl zu erreichen. Hierzu kann die betreffende Getriebedrehzahl im Regelgerät 11 eingegeben sein (Schaltstufe I oder 11). In einem solchen Fall ist es vorteilhaft, das Regelventil 46 als Proportionalventil auszubilden, um die Regelung auf einfache Weise durchführen zu können.

## Patentansprüche

1. Antriebseinrichtung, bestehend aus
   - einem Antriebsmotor (1), dessen Drehzahl durch ein Betätigungsglied veränderlich ist,
   - einem verstellbaren hydrostatischen Getriebe (26) mit einer Pumpe (3) und einem Hydromotor (5) mit veränderlichem Förder- und/oder Schluckvolumen
   - einem dem hydrostatischen Getriebe (26) nachgeschalteten, insbesondere unter Last schaltbaren Stufengetriebe (7),
   - wobei dem hydrostatischen Getriebe (26) eine Regeleinrichtung (20) zugeordnet ist, und
   - wobei ein Betätigungselement (9) zum Einleiten eines Gangwechsels vorgesehen ist,
   dadurch gekennzeichnet,
   - daß der Regeleinrichtung (20) eine die Übertragungsrichtung der übertragenen Leistung zwischen Antriebsmotor (1) und Stufengetriebe (7) feststellende Einrichtung (13,14,a,b) zugeordnet ist,
   - daß die Regeleinrichtung (20) nach Einleitung eines Gangwechsels in einen niedrigeren Gang (I) beim Vorhandensein einer Übertragungsrichtung vom Stufengetriebe (7) auf den Antriebsmotor, das Übersetzungsverhältnis des hydrostatischen Getriebes (26) in Richtung einer Verringerung der Abtriebsdrehzahl des Hydromotors (5;5.1,5.2) verstellt,
   - und daß der Schaltvorgang frühestens beim Erreichen der Übertragungsrichtung vom Antriebsmotor (2) zum Stufengetriebe (7) erfolgt.

2. Antriebseinrichtung nach Anspruch 1, dadurch gekennzeichnet, daß der Schaltvorgang nach dem Erreichen dieser Übertragungsrichtung erst dann erfolgt, wenn die Leistung einen vorgegebenen Wert hat, der in Abhängigkeit von der Ausgangsdrehzahl am Stufengetriebe (7) im niedrigeren Gang, in den zu schalten ist, festgelegt ist.

3. Antriebseinrichtung nach Anspruch 1 oder 2, dadurch gekennzeichnet, daß der Schaltvorgang erst dann durchgeführt wird, wenn die nach dem Schaltvorgang zu erwartende Eingangsdrehzahl des Stufengetriebes (7) eine bestimmte bzw. konstruktiv vorgegebene Ausgangsdrehzahl des hydrostatischen Getriebes (26) nicht übersteigt.

4. Antriebseinrichtung nach einem der Ansprüche 1 bis 3, dadurch gekennzeichnet, daß die Leistung und/oder die Übertragungsrichtung aus dem Verhältnis der Eingangs- und Ausgangsdrehzahl des hydrostatischen Getriebes (26) ermittelt wird.

5. Antriebseinrichtung nach einem der Ansprüche 1 bis 3, dadurch gekennzeichnet, daß die Leistung und/oder die Übertragungsrichtung aus dem Verhältnis der Stellung des Gaspedals (29) des Antriebsmotors (1) und der Ausgangs- oder Eingangsdrehzahl des hydrostatischen Getriebes (26) ermittelt wird.

**6.** Antriebseinrichtung nach einem der Ansprüche 1 bis 3, dadurch gekennzeichnet, daß die Leistung und/oder die Übertragungsrichtung aus der Druckdifferenz zwischen Hochdruck und Niederdruck im geschlossenen Kreislauf des hydrostatischen Getriebes (26) ermittelt wird.

**7.** Antriebseinrichtung nach einem der Ansprüche 1 bis 6, dadurch gekennzeichnet, daß die Regeleinrichtung (20) aus zwei Regelvorrichtungen (4,11) besteht, von denen die erste (11) die Gangwechsel bewirkt und die zweite (4) die Durchsatzmengen der Pumpe (3) und/oder des Hydromotors (5) einstellt.

**8.** Antriebseinrichtung nach Anspruch 7, dadurch gekennzeichnet, daß die erste Regelvorrichtung (11) eine elektronische Regelvorrichtung ist.

**9.** Antriebseinrichtung nach Anspruch 7 oder 8, dadurch gekennzeichnet, daß die zweite Regelvorrichtung (4) eine hydraulische Regelvorrichtung ist.

**10.** Antriebseinrichtung nach einem der Ansprüche 7 bis 9, dadurch gekennzeichnet, daß die zweite Regelvorrichtung (4) ein Drehzahl-oder Leistungsregler für das hydrostatische Getriebe (26) ist.

**11.** Antriebseinrichtung nach Anspruch 9 oder 10, dadurch gekennzeichnet, daß die zweite Regelvorrichtung (4) eine mit dem Antriebsmotor (1) synchron angetriebene Hilfspumpe (48) und wenigstens eine von deren Hilfsdruck beaufschlagbare hydraulische Verstelleinrichtung (21,21.1) zur Verstellung der Pumpe (3) und/oder des Hydromotors (5) aufweist.

**12.** Antriebseinrichtung nach Anspruch 11, dadurch gekennzeichnet, daß die Verstelleinrichtung (21) einen mit dem Verstellglied der Pumpe (3) oder dem Hydromotor (5,5.1,5.2) verbundenen Zylinder (41) und ein die Beaufschlagung des Zylinders (41) regelndes Regelventil (46) aufweist, das von der elektronischen Regelvorrichtung geregelt sein kann und vorzugsweise ein Fahrtrichtungswechselventil ist.

**13.** Antriebseinrichtung nach Anspruch 12, dadurch gekennzeichnet,

daß der Verstelleinrichtung (21.1) für den Hydromotor (5) ein Regelventil (61) zugeordnet ist, das vom Hilfsdruck und/oder Arbeitsdruck des hydrostatischen Getriebes (26) beaufschlagbar ist.

**14.** Antriebseinrichtung nach einem der Ansprüche 1 bis 13, dadurch gekennzeichnet, daß der Antriebswelle (3) des Antriebsmotors (1) oder einem zu dieser synchron drehenden Bauteil und der Ausgangswelle des hydrostatischen Getriebes (26) oder einem zu dieser synchron drehenden Bauteil jeweils wenigstens ein mit der Regeleinrichtung, vorzugsweise mit der elektronischen Regelvorrichtung (11) in Wirkverbindung stehender Drehzahlmesser (13,14) zugeordnet ist.

**15.** Antriebseinrichtung nach Anspruch 14, dadurch gekennzeichnet, daß die Leistung und/oder die Übertragungsrichtung durch Vergleich der sich im Betrieb einstellenden Verläufe der Eingangs- und/oder Ausgangsdrehzahl des hydrostatischen Getriebes (26) oder synchroner Drehzahlverläufe mit einem in der Regeleinrichtung, vorzugsweise in der elektronischen Regelvorrichtung (11), als Kennlinie (a,b) gespeicherten Verlauf ermittelt wird.

**16.** Antriebseinrichtung nach einem der Ansprüche 1 bis 15, dadurch gekennzeichnet, daß das hydrostatische Getriebe (26) mehrere Pumpen (3) und/oder mehrere Hydromotoren (5.1,5.2) konstanter und/oder einzeln oder in deren Summe verstellbarer Förder- bzw. Schluckvolumina aufweist.

**17.** Antriebseinrichtung nach Anspruch 16, dadurch gekennzeichnet, daß wenigstens zwei Pumpen oder Hydromotoren (5.1,5.2) parallel angeordnet sind, die einzeln oder gemeinsam einschaltbar sind.

**Claims**

**1.** A drive system comprising
- a driving motor (1) the speed of which can be varied by means of an operating member,
- an adjustable hydrostatic transmission (26) comprising a pump (3) and a hydraulic motor (5) with a variable delivery and/or intake volume,
- a change-speed gear (7), especially one that can be shifted under load, following the hydrostatic transmission (26),

- a control means (20) associated with the hydrostatic transmission (26), and
- an operating element (9) for initiating a gear change,

characterised in that

- the control means (20) has associated with it means (13, 14, a, b) for determining the direction of power transmission between the driving motor (1) and the change-speed gear (7);
- after initiation of a gear change into a lower gear (I) when the direction of power transmission is from the change-speed gear (7) to the driving motor the control means (20) changes the transmission ratio of the hydrostatic transmission (26) so as to reduce the output speed of the hydraulic motor (5; 5.1, 5.2); and
- the shifting process takes place no sooner than when the direction of transmission has come to be from the driving motor (2) to the change-speed gear (7).

2. A drive system according to claim 1, characterised in that the shifting process after this direction of transmission has been attained only takes place when the power has a predetermined value that is set depending on the output speed at the change-speed gear (7) in the lower gear stage into which it is to be shifted.

3. A drive system according to claim 1 or claim 2, characterised in that the shifting process is only performed when the expected post-change input speed of the change-speed gear (7) does not exceed a definite or constructively predetermined output speed of the hydrostatic transmission (26).

4. A drive system according to any one of claims 1 to 3, characterised in that the power and/or the direction of transmission is determined from the ratio of the input and output speeds of the hydrostatic transmission (26).

5. A drive system according to any one of claims 1 to 3, characterised in that the power and/or the direction of transmission is determined from the relationship between the position of the gas pedal (29) of the driving motor (1) and the input or output speed of the hydrostatic transmission (26).

6. A drive system according to any one of claims 1 to 3, characterised in that the power and/or the direction of transmission is determined from the pressure difference between the high and low pressure in the closed circuit of the hydrostatic transmission (26).

7. A drive system according to any one of claims 1 to 6, characterised in that the control means (20) comprises two control devices (4, 11), the first (11) of which effects the gear change and the second (4) sets the throughputs of the pump (3) and/or the hydraulic motor (5).

8. A drive system according to claim 7, characterised in that the first control device (11) is an electronic control device.

9. A drive system according to claim 7 or claim 8, characterised in that the second control device (4) is a hydraulic control device.

10. A drive system according to any one of claims 7 to 9, characterised in that the second control device (4) is a speed or power controller for the hydraulic transmission (26).

11. A drive system according to claim 9 or claim 10, characterised in that the second control device (4) has an auxiliary pump (48) driven synchronously with the driving motor (1) and at least one hydraulic adjusting means (21, 21.1), acted on by the auxiliary pressure thereof, for adjusting the pump (3) and/or the hydraulic motor (5).

12. A driving means according to claim 11, characterised in that the adjusting means (21) has a cylinder (41) connected to the adjusting member of the pump (3) or the hydraulic motor (5, 5.1, 5.2) and a control valve (46) controlling the pressurization of the cylinder (41) that can be controlled by the electronic control device and is preferably a valve for changing the direction of travel.

13. A drive system according to claim 12, characterised in that the means (21.1) for adjusting the hydraulic motor (5) has associated with it a control valve (61) that can be acted on by the auxiliary pressure and/or the working pressure of the hydrostatic transmission (26).

14. A drive system according to any one of claims 1 to 13, characterised in that the drive shaft (3) of the driving motor (1), or a component rotating synchronously therewith, and the output shaft of the hydrostatic transmission (26) or a component rotating synchronously therewith each have associated therewith at least one revolution counter (13, 14) operatively connected to the control means, preferably with the electronic control device (11).

15. A drive system according to claim 14, characterised in that the power and/or the direction of transmission are determined by comparison of the operational characteristic of the input and/or output speed of the hydrostatic transmission (26), or of speeds synchronous therewith, with a characteristic stored as characteristic curves (a, b) in the control means, preferably in the electronic control device (11).

16. A drive system according to any one of claims 1 to 15, characterised in that the hydrostatic transmission (26) includes a plurality of pumps (3) and/or a plurality of hydraulic motors (5.1, 5.2) the delivery or intake volumes of which are constant or are adjustable individually or in total.

17. A drive system according to claim 16, characterised in that at least two pumps or hydraulic motors (5.1, 5.2) are arranged in parallel and can be started separately or together.

**Revendications**

1. Dispositif d'entraînement, consistant en :
   - un moteur d'entraînement (1) dont la vitesse de rotation est variable au moyen d'un organe d'actionnement,
   - une transmission hydrostatique réglable (26) avec une pompe (3) et un moteur hydraulique (5) à volume de refoulement et/ou d'aspiration variables,
   - une transmission (7) à rapports de vitesses étagés, disposée à la suite de la transmission hydrostatique (26), en particulier pouvant changer de rapport en étant sous charge,
   - dans lequel un dispositif de régulation (20) est associé à la transmission hydrostatique (26), et
   - dans lequel est prévu un organe d'actionnement (9) pour amorcer un changement de rapport de vitesse,
   **caractérisé** en ce que :
   - un dispositif (13, 14, a, b) constatant le sens de transfert de la puissance transmise entre le moteur d'entraînement (1) et la transmission (7) à rapports étagés est associé au dispositif de régulation (20),
   - le dispositif de régulation (20), après amorçage d'un changement de rapport vers un rapport inférieur (I) en présence d'un sens de transfert à partir de la transmission (7) à rapports étagés vers le moteur d'entraînement, modifie le rapport de démultiplication de la transmission hydrostatique (26) dans le sens d'une diminution de la vitesse de rotation à la sortie du moteur hydraulique (5; 5.1, 5.2),
   - et le processus de changement de rapport a lieu au plus tôt lors de l'obtention du sens de transfert à partir du moteur d'entraînement (1) vers la transmission (7) à rapports étagés.

2. Dispositif d'entraînement selon la revendication 1, caractérisé en ce que le processus de changement de rapport n'a lieu, après obtention de ce sens de transfert, que lorsque la puissance a une valeur prédéterminée qui est fixée en fonction de la vitesse de rotation en sortie de la transmission (7) à rapports étagés dans son rapport inférieur sur lequel on doit la faire passer.

3. Dispositif d'entraînement selon la revendication 1 ou 2, caractérisé en ce que le processus de changement de rapport n'est exécuté que quand la vitesse de rotation à prévoir à l'entrée de la transmission (7) à rapports étagés, après le processus de changement de rapport, ne dépasse pas une vitesse de rotation déterminée ou prédéterminée par construction, en sortie de la transmission hydrostatique (26).

4. Dispositif d'entraînement selon une des revendications 1 à 3, caractérisé en ce que la puissance et/ou le sens de transfert est déterminé d'après le rapport entre la vitesse de rotation à l'entrée et la vitesse de rotation en sortie de la transmission hydrostatique (26).

5. Dispositif d'entraînement selon une des revendications 1 à 3, caractérisé en ce que la puissance et/ou le sens de transfert est déterminé d'après le rapport entre la position de la pédale d'accélérateur (29) du moteur d'entraînement (1) et la vitesse de rotation à la sortie ou à l'entrée de la transmission hydrostatique (26).

6. Dispositif d'entraînement selon une des revendications 1 à 3, caractérisé en ce que la puissance et/ou le sens de transfert est déterminé d'après la différence de pression entre la haute pression et la basse pression dans le circuit fermé de la transmission hydrostatique (26).

7. Dispositif d'entraînement selon une des revendications 1 à 6, caractérisé en ce que le dispositif de régulation (20) consiste en deux régulateurs (4, 11) dont le premier (11) provoque le changement de rapport et le deuxième (4) règle les débits de la pompe (3) et/ou du moteur hydraulique (5).

8. Dispositif d'entraînement selon la revendication 7, caractérisé en ce que le premier régulateur (11) est un régulateur électronique.

9. Dispositif d'entraînement selon la revendication 7 ou 8, caractérisé en ce que le deuxième régulateur (4) est un régulateur hydraulique.

10. Dispositif d'entraînement selon une des revendication 7 à 9, caractérisé en ce que le deuxième régulateur (4) est un régulateur de vitesse de rotation ou de puissance pour la transmission hydrostatique (26).

11. Dispositif d'entraînement selon la revendication 9 ou 10, caractérisé en ce que le deuxième régulateur (4) présente une pompe auxiliaire (48) entraînée en synchronisme avec le moteur d'entraînement (1) et au moins un dispositif de réglage (21, 21.1) soumis à la pression auxiliaire de celle-ci pour le réglage de la pompe (3) et/ou du moteur hydraulique (5).

12. Dispositif d'entraînement selon la revendication 11, caractérisé en ce que le dispositif de réglage (21) présente un vérin (41) relié à l'organe de réglage de la pompe (3) ou du moteur hydraulique (5, 5.1, 5.2) et une vanne de régulation (46) réglant l'alimentation du vérin (41) et pouvant être commandée par le régulateur électronique, et étant de préférence une vanne de changement du sens de marche.

13. Dispositif d'entraînement selon la revendication 12, caractérisé en ce qu'au dispositif de réglage (21.1) pour le moteur hydraulique (5) est associée une vanne de régulation (61) pouvant être soumise à la pression auxiliaire et/ou à la pression de travail de la transmission hydrostatique (26).

14. Dispositif d'entraînement selon une des revendications 1 à 13, caractérisé en ce qu'à l'arbre d'entraînement (3) du moteur d'entraînement (1) ou à un élément de construction tournant en synchronisme avec celui-ci, et à l'arbre de sortie de la transmission hydrostatique (26) ou à un élément de construction tournant en synchronisme avec celui-ci, est associé chaque fois au moins un compte-tours (13, 14) coopérant avec le dispositif de régulation, de préférence avec le régulateur électronique (11).

15. Dispositif d'entraînement selon la revendication 14, caractérisé en ce que la puissance et/ou le sens de transfert ont déterminé par comparaison de l'évolution, s'établissant pendant le travail, de la vitesse à l'entrée et/ou de la vitesse en sortie de la transmission hydrostatique (26), ou de l'évolution d'une vitesse synchrone à celle-ci, avec une évolution mise en mémoire dans le régulateur électronique (11) en tant que courbe caractéristique (a, b).

16. Dispositif d'entraînement selon une des revendications 1 à 15, caractérisé en ce que la transmission hydrostatique (26) présente plusieurs pompes (3) et/ou plusieurs moteurs hydrauliques (5.1, 5.2) à volumes de refoulement et d'aspiration constants et/ou réglables individuellement ou dans leur total.

17. Dispositif d'entraînement salon la revendication 16, caractérisé on ce qu'au moins deux pompes ou au moins deux moteurs hydrauliques (5.1, 5.2) sont disposés en parallèle, en pouvant être mis en action individuellement ou ensemble.

FIG.1

EP 0 282 010 B1

FIG. 2

FIG. 3

FIG. 4